# DEMANDE DE BREVET EUROPEEN

(11) **EP 2 633 758 A1**
(43) Date de publication de la demande: **04.09.2013**
(21) Numéro de dépôt: 13156275.3
(22) Date de dépôt: 22.02.2013
(51) Int. Cl.: A21B 3/13

(54) **Contenant alimentaire plastique**

(30) Priorité: 01.03.2012 FR 1251907
(71) Demandeur: Gilac, 01100 Oyonnax (FR)
(72) Inventeur: Pezot, Patrick, 01100 Bellignat (FR)
(74) Mandataire: Oger, Cyril Pierre

(57) **Abrégé**

L'invention concerne un procédé de fabrication d'un contenant alimentaire (1) plastique, comprenant un fond (10) et au moins une paroi (11A, 11B, 11C, 11D).

Selon l'invention, le procédé comprend les étapes suivantes :
- on dispose dans l'empreinte d'un moule correspondant aux parties constitutives du contenant à obtenir un film anti-adhérent (20) ;
- on introduit une matière plastique dans ledit moule de façon à ce que ledit film (20) soit noyé dans ladite matière plastique et forme un revêtement anti-adhérent sur les faces internes du contenant obtenu ;
- on refroidit le contenant obtenu.

## Description

### 1. Domaine de l'invention

Le domaine de l'invention est celui des récipients pour le stockage de produits alimentaires.

La présente invention concerne notamment, mais non exclusivement, la réalisation d'un récipient de stockage de pâte à pain pour boulanger.

### 2. Etat de la technique

Dans le domaine de boulangerie, préalablement à la cuisson de la pâte à pain, il est nécessaire de laisser reposer cette pâte.

Le boulanger met ainsi en bac la pâte à pain et place un ou plusieurs ce ces bacs dans une enceinte à 2°C, durant 24 à 72 heures classiquement.

Les bacs actuellement présents sur le marché sont généralement de forme rectangulaire et sont fabriqués en polypropylène ou polyethylène alimentaire. Ils nécessitent de saupoudrer de la farine sur le fond du bac (cette opération est plus communément appelée « fleurage ») de façon à éviter que la pâte à pain ne colle sur le fond. Le fleurage des bacs de pâte à pain est d'autant plus important que la pâte à pain est hydratée.

Or, le fleurage entraîne un dégagement de poussières de farine qui favorisent le développement des allergies respiratoires (rhinite et asthme principalement).

La mise en oeuvre des bacs de stockage des pâtes connus de l'état de la technique ne peut ainsi se faire qu'au prix d'une consommation de farine relativement importante qui est source d'empoussièrement.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un récipient pour le stockage des pâtes qui permette de supprimer, ou à tout le moins réduire, la consommation de farine nécessaire au fleurage des récipients connus de l'état de la technique.

Un autre objectif de l'invention, dans au moins un de ses modes de réalisation, est de proposer une technique de fabrication qui permette d'obtenir un contenant alimentaire de forme géométrique quelconque et dont les coûts sont réduits.

Encore un autre objectif de l'invention, dans au moins un de ses modes de réalisation, est de fournir un récipient pour le stockage des pâtes qui soit robuste et facilite la manipulation de la pâte placée dans le récipient.

### 4. Exposé de l'invention

Ces objectifs, ainsi que d'autres qui apparaîtront plus clairement par la suite, sont atteints à l'aide d'un procédé de fabrication d'un contenant alimentaire plastique tel que décrit précédemment, comprenant les étapes suivantes :
- on dispose dans l'empreinte d'un moule correspondant aux parties constitutives du contenant à obtenir un film anti-adhérent ;
- on introduit une matière plastique dans ledit moule de façon à ce que ledit film soit noyé dans ladite matière plastique et forme un revêtement anti-adhérent sur les faces internes du contenant ainsi obtenu ;
- on refroidit le contenant obtenu.

De façon préférentielle, ledit film est disposé sur une partie ou la totalité des faces de l'empreinte du moule.

Ainsi, l'invention propose de disposer un revêtement anti-adhésif sur une partie ou la totalité des faces internes d'un contenant plastique alimentaire.

Le contenant anti-adhérent ainsi obtenu est apte au contact alimentaire et destiné à recevoir un ou plusieurs produits alimentaires.

Il est adapté en particulier, mais non exclusivement, pour la fabrication de pains et/ou de pizzas.

Un tel contenant anti-adhérent permet ainsi de limiter l'adhérence de la pâte à pain ou pizza, ou assimilé, sur le fond et les parois intérieures du contenant même lorsque cette pâte est fortement hydratée.

Il permet de réduire l'utilisation de farine et, par conséquent, l'empoussièrement, et donc de minimiser les risques d'allergies respiratoires.

Il peut, par exemple, prendre la forme d'un bac de fermentation de pâte à pain pour boulanger, qui permet d'obtenir un produit levé disponible pour une phase finale de cuisson

Il peut est en outre être utilisé sur une plage de température allant de -40°C à +90°C.

Selon une mise en oeuvre particulière, ledit contenant alimentaire est obtenu par le procédé IML (« pour « In-Mold Labelling » en anglais).

Cette technique permet d'obtenir des contenants alimentaires de toutes formes qui sont robustes (résistants aux égratignures, au froid et à l'humidité).

L'invention concerne également un contenant alimentaire plastique comprenant un fond et au moins une paroi.

Selon l'invention, un tel contenant comprend un revêtement anti-adhérent disposé sur la face interne du fond et sur au moins une partie de la hauteur de la face interne de ladite au moins une paroi.

De façon avantageuse, le revêtement anti-adhérent est un film monocouche ou multi-couche, en fonction de la matière utilisée pour la fabrication du contenant.

Le revêtement anti-adhérent est robuste (c'est-à-dire durable, idéalement sur la durée de vie du produit, qui est de deux ans au moins) en ce sens qu'il résiste au lavage en lave-vaisselle (et aux détergents) et aux rayures provoquées par les spatules par exemple.

Avantageusement, le contenant plastique alimentaire est par exemple fabriqué en polyéthylène, polypropylène, polypropylène additivé et/ou chargé (charges minérales), polyamide, polycarbonate, copolyester.

Préférentiellement, ledit revêtement anti-adhérent comprend une première couche destinée à venir en contact avec un produit alimentaire placé dans le contenant.

Selon un mode de réalisation particulier de l'invention, ladite première couche est en polypropylène.

La première couche peut être fabriquée dans toute autre matière connue de l'homme du métier et présentant des caractéristiques d'anti-adhérence.

Dans un mode de réalisation particulier de l'invention, ladite première couche est disposée sur une deuxième couche assurant l'adhésivité du revêtement avec les faces internes du fond et des parois du contenant.

De façon avantageuse, ladite deuxième couche est en polyéthylène, polypropylène, copolyester, ou polyamide.

De préférence, ledit revêtement anti-adhérent est d'épaisseur comprise entre 30 µm et 180 µm.

Dans une application particulière, ledit contenant est un bac pour pâte à pain ou à pizza.

Plus généralement, le contenant plastique est utilisable par les professionnels de la restauration hors foyer.

Selon une mise en oeuvre particulière, ledit revêtement anti-adhérent est thermosoudé sur les faces internes du fond et de ladite au moins une paroi.

Selon une variante, ledit revêtement anti-adhérent est collé sur les faces internes du fond et de ladite au moins une paroi.

### 5. Liste des figures

D'autres caractéristiques et avantages de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 est une vue en perspective d'un contenant selon un mode de réalisation de l'invention ;
- la figure 2 présente un organigramme des étapes principales d'un exemple de procédé de fabrication du contenant de la figure 1 ;
- la figure 3 est une vue schématique en coupe du contenant de la figure 1.

### 6. Description détaillée d'un mode de réalisation de l'invention

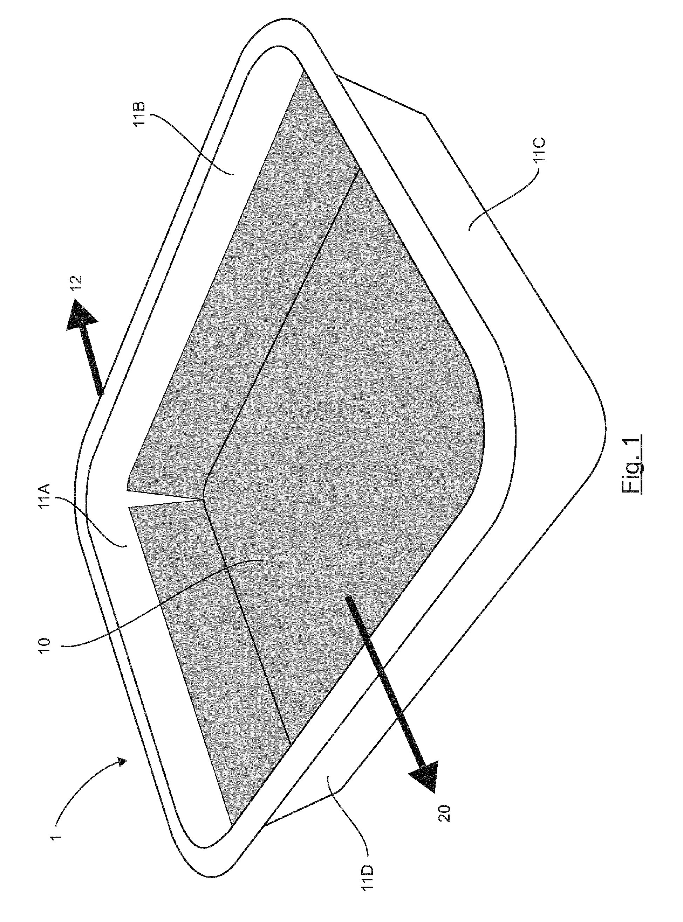

On présente maintenant, en relation avec les figures 1 à 3, un mode de réalisation de l'invention.

La figure 1 est une vue en perspective d'un contenant, ou récipient, selon l'invention qui prend ici la forme d'un bac 1 comprenant un réceptacle creux destiné à recevoir un produit alimentaire.

Dans cet exemple, le bac 1 est destiné au repos de la pâte à pain ou à pizza qui est placée dans le réceptacle du bac 1.

Le bac 1 présente un fond 10 plat de forme rectangulaire dont les coins sont arrondis et des parois 11A, 11B, 11C, 11D évasées à partir du fond sur les quatre côtés du bac 1. La partie supérieure des parois 11A, 11B, 11C, 11D est recourbée de façon à former un rebord 12 qui s'étend sur le pourtour de l'ouverture du bac 1.

De façon avantageuse, les faces internes du bac 1, qui comprennent la face interne du fond 10 et les faces internes des quatre parois 11A, 11B, 11C, 11D, présentent un revêtement 20 qui limite l'adhérence de la pâte sur ce fond 10 et ces parois 11A, 11B, 11C, 11D.

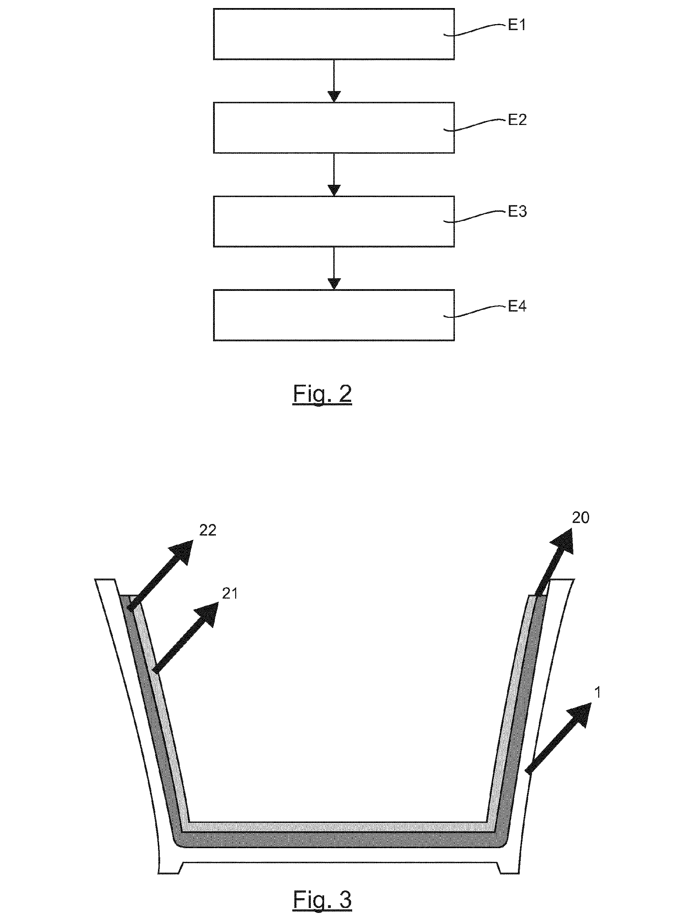

Dans ce mode de réalisation particulier, le bac 1 est en polyéthylène haute densité et le revêtement 20 est un film multicouche qui comprend deux couches 21 et 22 superposées, comme illustré sur la figure 3.

La première couche 21 qui est destinée à venir en contact avec la pâte à pain est en polypropylène (PP). Cette première couche 21 assure les propriétés de surface du complexe. Cette première couche 21 pourrait également être fabriquée dans une autre matière présentant des caractéristiques d'anti-adhérence et compatible avec les exigences de l'industrie alimentaire.

La deuxième couche 22 est en polyéthylène (PE) et assure l'adhésivité du revêtement 20 avec les faces internes du bac 1.

L'épaisseur de chacune des couches 21, 22 peut varier entre 30 µm et 90µm, et en particulier entre 40 µm et 75µm.

Dans ce mode de réalisation particulier, le film multicouche 20 est disposé sur une partie de la hauteur de la face interne des parois 11A, 11B, 11C, 11D.

En variante, le film 20 peut être disposé sur toute la hauteur de la face interne des parois 11A, 11B, 11C, 11D.

L'effet anti-adhérent qui donc est obtenu par l'intégration d'un revêtement 20 au bac 1 permet de supprimer, ou à tout le moins minimiser, le fleurage du bac 1, et donc l'utilisation de farine.

La mise en oeuvre d'un tel revêtement facilite en outre la manipulation de la pâte par le boulanger puisque cette dernière ne colle pas, ou peu, aux faces intérieures du bac 1.

Le revêtement 20 anti-adhérent est, dans le mode de réalisation représenté sur les figures, intégré à la surface intérieure du bac 1 par le procédé IML dont les étapes principales sont détaillées sur la figure 2.

Le moule de formage ayant la forme du produit fini (en l'occurrence la forme du bac 1), on dispose dans l'empreinte du moule le film 20 multicouche au cours d'une première étape E1. Le film 20 est disposé sur une partie ou la totalité des faces de l'empreinte du moule correspondant à la totalité des différentes parties constitutives du bac 1 à obtenir.

Dans une étape E2, on injecte ensuite une matière plastique dans le moule. La matière injectée est, par exemple, du polyéthylène haute densité

Il pourrait s'agir d'autres résines plastiques (polypropylène, polypropylène additivé, polyamide, etc).

Dans une étape E3, le film et la matière plastique fusionnent.

En d'autres termes, on fusionne la matière plastique et le film 20 multicouche pendant le processus de moulage par injection. Le film 20 se trouve ainsi noyé dans la matière plastique du bac 1 et recouvre les faces internes du bac 1, formant ainsi un revêtement anti-adhérent.

Dans une étape E4 on refroidit le bac 1 ainsi formé.

La technologie IML est essentiellement déployée en injection mais peut être dans son principe mise en oeuvre par soufflage et rotomoulage.

En tout état de cause, le cycle de fabrication par injection (ou soufflage), intègre une phase de refroidissement (étape E4) que ce cycle mette en oeuvre ou non la technologie IML.

L'approche décrite ci-dessus permet d'associer les propriétés du bac (durabilité, résistance mécanique notamment aux chocs à froid, souplesse) et les caractéristiques du film (faible adhérence du contenu alimentaire du bac sur le film).

Le revêtement anti-adhérent 20 peut être un film multicouche ou monocouche en fonction de la matière utilisée pour la fabrication du bac.

Il est à noter que si le revêtement 20 anti-adhérent est constitué d'un film monocouche intégré à la surface du bac 1 par le procédé IML, le matériau du film monocouche doit être identique au matériau du bac pour permettre la fusion du film et du matériau du bac.

Par ailleurs, si le revêtement 20 anti-adhérent est constitué d'un film multicouche intégré à la surface du bac 1 par le procédé IML, le matériau de la couche qui assure l'adhésivité du revêtement 20 avec les parois internes du bac 1 (la couche 22 dans le mode de réalisation décrit précédemment) doit être identique au matériau du bac pour permettre la fusion de la couche et du matériau du bac.

Le revêtement anti-adhérent mono ou multi-couche pourra être disposé sur les faces internes du bac par d'autres procédés de fabrication dans d'autres modes de réalisation.

Ainsi, selon un mode de réalisation particulier, le revêtement anti-adhérent mono ou multi-couche peut être thermosoudé au contenant, par hautes fréquences par exemple. Le soudage du revêtement anti-adhérent est mis en oeuvre par chauffage et polymérisation partielle des deux matières (du film anti-adhérent et du bac).

Dans un autre mode de réalisation, le revêtement anti-adhérent mono ou multi-couche est collé sur le fond et les parois du contenant à l'aide d'une masse adhésive apte au contact alimentaire.

Sans pour cela sortir du cadre de l'invention, le procédé peut être utilisé pour fabriquer un contenant dans une autre matière plastique que le polyéthylène en fonction de l'application visée.

Ainsi, le contenant peut être fabriqué en polypropylène, en polypropylène additivé et/ou chargé (charges minérales), en polyamide, en polycarbonate, ou en copolyester.

Le contenant peut être un bac pour la boulangerie, et notamment pour la pâte à pain, un bac pour pâte à pizza, ou tout autre contenant plastique utilisable par les professionnels de la restauration hors foyer.

Par ailleurs, le contenant peut comprendre plusieurs réceptacles.

Les avantages ressortent bien de la description, en particulier on souligne:
- les coûts réduits d'obtention du contenant alimentaire;
- la possibilité d'obtenir un contenant de forme géométrique quelconque (rectangulaire ou circulaire par exemple) ;
- la possibilité d'obtenir un contenant alimentaire plastique avec un revêtement anti-adhérent efficace et robuste dans le temps (c'est-à-dire résistant aux rayures et au vieillissement).

## Revendications

1. Procédé de fabrication d'un contenant alimentaire (1) plastique, comprenant un fond (10) et au moins une paroi (11A, 11B, 11C, 11D), **caractérisé en ce que** le procédé comprend les étapes suivantes :
- on dispose dans l'empreinte d'un moule correspondant aux parties constitutives du contenant à obtenir un film anti-adhérent (20) ;
- on introduit une matière plastique dans ledit moule de façon à ce que ledit film (20) soit noyé dans ladite matière plastique et forme un revêtement anti-adhérent sur les faces internes du contenant obtenu ;
- on refroidit le contenant obtenu.

2. Procédé selon la revendication 1, **caractérisé en ce que** ledit film anti-adhérent (20) est disposé sur une partie ou la totalité des faces de l'empreinte du moule.

3. Procédé selon la revendication 1 ou 2, **caractérisé en ce que** ledit contenant alimentaire (1) est obtenu par le procédé IML.

4. Contenant alimentaire (1) plastique obtenu selon le procédé de l'une des revendications 1 à 3, comprenant un fond (10) et au moins une paroi (11A, 11B, 11C, 11D), et **caractérisé en ce qu'il** comprend un revêtement anti-adhérent (20) disposé sur la face interne du fond (10) et sur au moins une partie de la hauteur de la face interne de la paroi (11A, 11B, 11C, 11D).

5. Contenant alimentaire (1) selon la revendication 4, **caractérisé en ce que** le dit revêtement anti-adhérent (20) est un film monocouche.

6. Contenant alimentaire (1) selon la revendication 4, **caractérisé en ce que** ledit revêtement anti-adhérent (20) est un film multi-couches.

7. Contenant alimentaire (1) selon l'une des revendications 4 à 6, **caractérisé en ce que** le matériau plastique dudit contenant (1) est choisi parmi le polyéthylène, le polypropylène, le polypropylène additivé et/ou chargé, le copolyester, le polyamide, le polycarbonate.

8. Contenant alimentaire (1) selon l'une des revendications 4 à 7, **caractérisé en ce que** ledit revêtement anti-adhérent (20) comprend une première couche (21) destinée à venir en contact avec un produit alimentaire placé dans le contenant (1).

9. Contenant alimentaire (1) selon la revendication 8, caractérisé en ce ladite première couche (21) est en polypropylène.

10. Contenant alimentaire (1) selon la revendication 8 ou 9, **caractérisé en ce que** ladite première couche (21) est disposée sur une deuxième couche (22) assurant l'adhésivité dudit revêtement (20) avec les faces internes dudit fond (10) et de ladite au moins une paroi (11A, 11B, 11C, 11D).

11. Contenant alimentaire (1) selon la revendication 10, **caractérisé en ce que** ladite deuxième couche (22) est en polyéthylène, polypropylène, copolyester, ou polyamide.

12. Contenant alimentaire (1) selon l'une des revendications 4 à 11, **caractérisé en ce que** ledit revêtement anti-adhérent (20) est d'épaisseur comprise entre 30 µm et 180 µm.

13. Contenant alimentaire (1) selon l'une des revendications 4 à 13, **caractérisé en ce que** ledit contenant (1) est un bac pour pâte à pain ou à pizza.

14. Contenant alimentaire (1) selon l'une des revendications 4 à 13, **caractérisé en ce que** ledit revêtement anti-adhérent (20) est thermosoudé sur les faces internes dudit fond (10) et de ladite au moins une paroi (11A, 11B, 11C, 11D).

15. Contenant alimentaire (1) selon l'une des revendications 4 à 14, **caractérisé en ce que** ledit revêtement anti-adhérent (20) est collé sur les faces internes dudit fond (10) et de ladite au moins une paroi (11A, 11B, 11C, 11D).
